**Europäisches Patentamt**

**European Patent Office**

**Office européen des brevets**

(11) Veröffentlichungsnummer: **0 198 424**
**A2**

## (12) EUROPÄISCHE PATENTANMELDUNG

(21) Anmeldenummer: **86104903.9**

(22) Anmeldetag: **10.04.86**

(51) Int. Cl.⁴: **H 02 G 3/06**

(30) Priorität: **12.04.85 CH 1569/85**

(43) Veröffentlichungstag der Anmeldung: **22.10.86**
**Patentblatt 86/43**

(84) Benannte Vertragsstaaten: **AT BE CH DE FR GB IT LI NL SE**

(71) Anmelder: **Reichle + De-Massari AG Elektroingenieure, Binzstrasse 31, CH-8620 Wetzikon (CH)**

(72) Erfinder: **Reichle, Hans, Guldislooweg 16, CH-8620 Wetzikon ZH (CH)**

(74) Vertreter: **Petschner, Goetz, Patentanwaltsbüro G. Petschner Seidengasse 18, CH-8001 Zürich (CH)**

(54) Montageadapter für den Anschluss von Koaxialkabel bei Schwachstromschaltungs- und Verteileranordnungen.

(57)    Der Montageadapter weist für die Aufnahme einer Kabelbuchse (11) eine Durchstecköffnung (2) auf, durch die die Kabelbuchse (11) bis zum Anschlag des sechskantförmigen Anschlagflansches (12) am stegförmigen Körper (1) hindurchgesteckt wird. Hierbei ragen vom Montagesteg (1) rückseitig und nahe dem Rand der betreffenden Durchstecköffnung (2) für die Kabelbuchse (11) mindestens zwei, sich diagonal gegenüberliegende, zum schnappenden Hintergreifen des Anschlagflansches (12) der durchgesteckten Kabelbuchse (11) bestimmte Klinken (3) ab.

    Daraus ergibt sich ein Montageadapter für Koaxial-Verteilersysteme, bei dem sich die Kabelbuchsen auch bei dichtester Belegung sehr rationell montieren lassen bei einer optimalen Verdrehsicherung für ein beliebiges An- oder Abkoppeln der Kabelstecker an den mit dem Montagesteg fest verbundenen Kabelbuchsen. Zudem ist ein solcher Adapter auch für die Bestückung von Unterputzdosen und dgl. für den Hausantennenanschluss u. dgl. mit Koaxialkabelbuchsen geeignet.

0198424
85119
04/1986

Reichle + De-Massari AG

Wetzikon/Schweiz

Elektro - Ingenieure

Montageadapter für den Anschluss von Koaxialkabel bei Schwachstromschaltungs-

und Verteileranordnungen

Die vorliegende Erfindung betrifft einen Montageadapter für
den Anschluss von Koaxialkabel bei Schwachstromschaltungs-
und Verteileranordnungen, zur durchsteckbaren Bestückung mit
mindestens einer Kabelbuchse eines Koaxialverbinders, welche
Buchse kabel- bzw. rückseitig einen polygonalen, insbesondere
sechskantförmigen Anschlagflansch trägt, der gegebenenfalls
mit einer kupplungs- bzw. frontseitigen Gegenmutter zusammenwirkt.

Bei Koaxialkabel-Verteilersystemen von Schwachstromanlagen, beispielsweise Telefonanlagen, werden in der Regel pro Anlage eine sehr grosse Anzahl Koaxialverbinder mit je einer Kabelbuchse und einem Kabelstecker, die mittels Bajonettkupplung schnell lösbar miteinander verbunden sind, benötigt. Hierbei sind alle Kabelbuchsen fest mit der Verteileranordnung verbunden, wofür jede Kabelbuchse durch eine entsprechende Durchstecköffnung in den üblichen Montageplatten oder -stegen am Verteilergestell hindurchgesteckt und dort verschraubt wird. Entsprechend besitzt die Kabelbuchse rückseitig einen sechskantförmigen Anschlagflansch, der mit einer frontseitigen Gegenmutter zusammenwirkt.

Diese Art der Befestigung der Kabelbuchsen der Koaxialverbinder an den Montagestegen ist insbesondere bei dichter Belegung mühsam und zeitraubend, da das Gegenhalten des Anschlagflansches mit einem entsprechenden Schraubenschlüssel kaum noch durchführbar ist. Andrerseits muss die Kabelbuchse aber so fest sitzen, dass der Kabelstecker beliebig oft an- und abgekuppelt werden kann, ohne dass sich der Kabelstecker verdreht, da sonst Gefahr eines Abdrehens des Koaxialkabels besteht.

Es ist somit Aufgabe der vorliegenden Erfindung, einen Montageadapter für den Anschluss von Koaxialkabel zu schaffen, bei dem die Kabelbuchsen auch bei dichtester Belegung leicht und schnell montiert werden können, wobei eine ausreichende Verdrehsicherung für ein beliebiges An- und Abkoppeln der Kabelstecker gewährleistet ist. Zudem soll ein solcher Adapter
auch für die Bestückung von Unterputzdosen und dgl. für den
Hausantennenanschluss u. dgl. mit Koaxialkabelbuchsen geeignet sein.

Dies wird erfindungsgemäss zunächst dadurch erreicht, dass
vom Adapterkörper rückseitig und nahe dem Rand der betreffenden Durchstecköffnung für die Kabelbuchse mindestens zwei,
sich diagonal gegenüberliegende, zum schnappenden Hintergreifen des Anschlagflansches der durchgesteckten Kabelbuchse
bestimmte Klinken abragen.

Damit lässt sich die Kabelbuchse schraublos durch einfaches
Eindrücken zwischen die Klinken "klick"-befestigen, wobei die
Klinken selbst schon eine gewisse Verdrehsicherung darstellen.
Zumindest könnte aber die Gegenmutter festgezogen werden,
ohne am Anschlagflansch gegenhalten zu müssen, insbesondere
dann, wenn der diagonale Abstand zwischen den Klinken der
Schlüsselweite des Anschlagflansches entspricht.

Auf die Gegenmutter kann aber ganz verzichtet werden bei Erreichung einer optimalen Verdrehsicherung, wenn in einer weiteren Ausgestaltung des Adapters vom Adapterkörper rückseitig
zusätzlich mindestens zwei sich diametral gegenüberliegende
Anschlagmittel abragen, deren diagonaler Abstand der Schlüsselweite des Anschlagflansches des Kabelsteckers entspricht.

Hierbei kann die Anordnung so sein, dass die Anschlagmittel in Umfangsrichtung bezüglich der Klinken versetzte, die Verdrehkräfte beim An- oder Abkuppeln des Kabelsteckers aufnehmende Stege sind und/oder dass die Anschlagmittel parallel zur Anschlagfläche der Klinken abragende, die Seitenkräfte auf die Klinken sowie die Verdrehkräfte beim An- oder Abkuppeln des Kabelsteckers aufnehmende Erhebungen sind.

Für eine ausreichende Elastizität der Klinken, insbesondere auch, um diese für eine Demontage der Kabelbuchse wegdrücken zu können, ist es vorteilhaft, wenn die Wurzel des elastischen Armes jeder Klinke am Adapterkörper vertieft angeordnet ist.

Für eine Verwendung am Gestell von Verteilersystemen ist es vorteilhaft, wenn der Montageadapter ein stegförmiger Körper ist. Für eine direkte oder indirekte Befestigung des Montageadapters durch Verschraubung oder Verklinkung an einer Mehrfacheinbauboxe oder einer Unterputz-Anschlussdose ist ein steckdosenförmiger Kunststoff-Körper zweckmässig. In diesem Falle ist es vorteilhaft, wenn die indirekte Befestigung des Adapter-Körpers über einen Montage-Ring erfolgt, mit dem der Körper aufspannbar ist.

Zweckmässig ist es zudem, wenn der Montageadapter aus einem Spritzgussteil aus einem geeigneten Kunststoff besteht.

Beispielsweise Ausführungsformen des Erfindungsgegenstandes sind nachfolgend anhand der Zeichnung näher erläutert. Es zeigen:

Fig. 1   in schaubildartiger Darstellung einen erfindungsgemässen Montageadapter mit der Kabelbuchse eines Koaxialverbinders;

Fig. 2   ausschnittweise und im Schnitt ein Detail des Monta-
         geadapters gemäss Fig. 1, in grösserem Massstab;

Fig. 3   in einer Ansicht von unten eine weitere Ausführungsform eines Montageadapters;

Fig. 4   die Anordnung gemäss Fig. 3 in einer Seitenansicht,
         im Teilschnitt;

Fig. 5   einen Montage-Ring im Querschnitt, für die Befestigung des Montageadapters gemäss den Fig. 3 und 4;

                                                          und

Fig. 6 und 7 eine Seitenansicht im Schnitt und eine Draufsicht
         einer Mehrfach-Einbauboxe für den Montageadapter gemäss den Fig. 3 und 4.

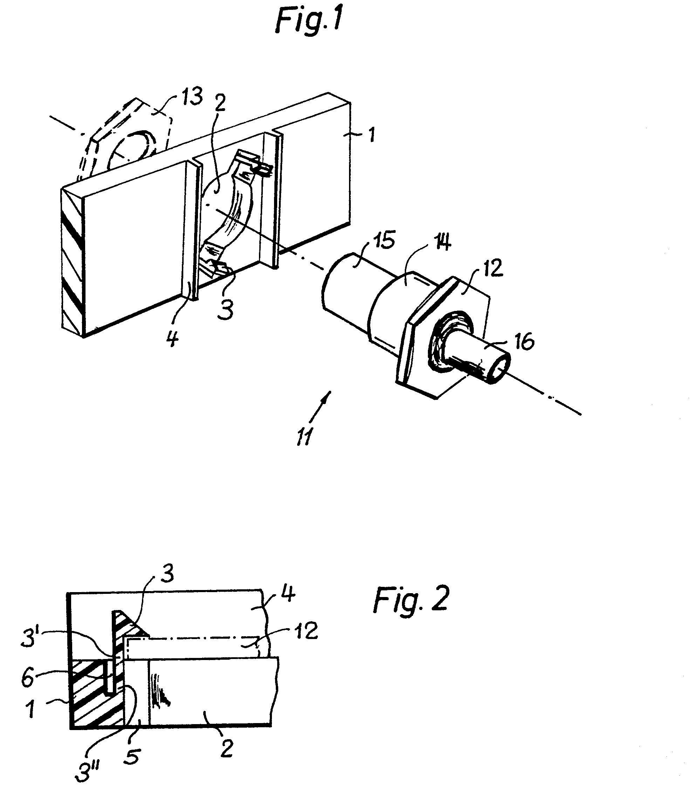

Der Montageadapter gemäss Fig. 1 umfasst einen für die Montage an Verteilersystemen geeigneten, hier nur ausschnittweise dargestellten stegförmigen Körper 1 mit hier nur einer
Kabelbuchse 11. Normalerweise sind solche Montagestege oder
Montageplatten, welche am Verteilergestell angeschraubt oder
angeschnappt werden, für die Aufnahme einer Mehrzahl solcher
Kabelbuchsen vorgesehen.

Für die Aufnahme einer Kabelbuchse 11 eines handelsüblichen,
noch einen nicht näher gezeigten Kabelstecker umfassenden Koaxialverbinders weist der Montagesteg 1 eine Durchstecköffnung 2 auf, durch welche die Kabelbuchse 11 von der Rückseite her (in der Darstellung von vorn) bis zum Anschlag des
sechskantförmigen Anschlagflansches 12 am Steg hindurchgesteckt wird.

Soweit sind solche Anordnungen bekannt, bei denen dann auf
das betreffende Gewindestück 14 eine Gegenmutter 13 aufgebracht wird.

Erfindungsgemäss kann nun auf die Gegenmutter verzichtet werden, indem vom Montagesteg 1 rückseitig und nahe dem Rand
der betreffenden Durchstecköffnung 2 hier zwei, sich diagonal
gegenüberliegende, zum schnappenden Hintergreifen des Anschlagflansches 12 der durchgesteckten Kabelbuchse 11 bestimmte Klinken 3 abragen. Zusätzlich ragen weiter zwei sich
ebenfalls diagonal gegenüberliegende, in Umfangsrichtung bezüglich der Klinken 3 versetzte Stege 4 ab.

Die betreffende Anordnung der Klinken 3 und Stege 4 ist hierbei von der polygonalen, hier sechskantförmigen Ausbildung des
Anschlagflansches 12 abhängig. Dabei entspricht der diagonale
Abstand zwischen den Klinken 3 sowie der diagonale Abstand
zwischen den Stegen 4 der Schlüsselweite des Anschlagflansches 12.

Für ein leichtes Eindrücken des Anschlagflansches 12 zwischen
die Klinken 3 und gegebenenfalls deren Aufspreizung zur Demontage ist die Wurzel 3" des elastischen Armes 3' der Klinke 3
gemäss Fig. 2 im Montagesteg 1 vertieft angeordnet, was mit
einem Einschnitt 6 erreicht werden kann. Bezüglich der Durchstecköffnung 2 sind die Klinken 3 zudem radial entsprechend
der lichten Weite des Anschlagflansches 12 zurückversetzt.

Zudem können die Stege 4 etwas über die Klinken 3 hinausragen,
um bei einem "blinden" Eindrücken des Flansches 12 zwischen
die Klinken 3 den Flansch vorauszurichten und zu führen.

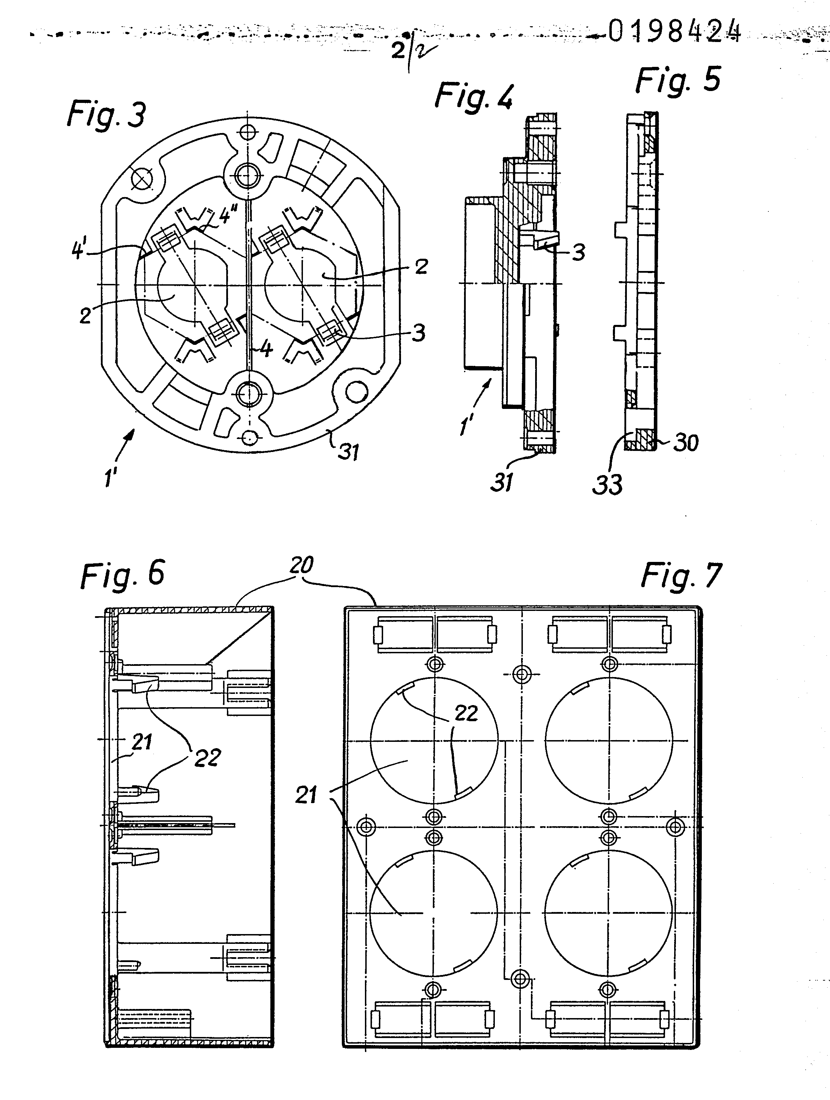

Um auch übliche Unterputz-Anschlussdosen u. dgl. oder Mehrfach-Einbauboxen 20 gemäss den Fig. 6 und 7 mit Kabelbuchsen
eines Koaxialverbinders ausrüsten zu können, ist eine alternative Ausführungsform eines Montageadapters gemäss den Fig. 3
und 4 vorgesehen. Dieser umfasst einen steckdosenförmigen
Kunststoff-Körper 1' mit hier zwei Durchstecköffnungen 2 für
je eine Kabelbuchse. Dieser Kunststoff-Körper 1' besitzt einen
Montageflansch 31 zum direkten oder indirekten Befestigen durch Verschraubung oder Verklinkung an Unterputz-Anschlussdosen (nicht gezeigt) oder an einer Mehrfach-Einbaubox 20 gemäss den Fig. 6 und 7. Für eine indirekte Befestigung weist
letztere an jeder Montageöffnung 21 ein Paar Klinken 22 auf,
welche in Hinterschneidungen 33 eines Montage-Ringes 30 einklinken können. Dieser Montage-Ring 30 sitzt hierbei auf dem
Montageflansch 31 des Adapters 1' auf und fixiert diesen.

Um neben der Aufnahme der Verdrehkräfte beim An- oder Abkuppeln des Kabelsteckers durch die anhand der Anordnung gemäss
den Fig. 1 und 2 beschriebenen Anschlagmittel weiter die Seiteikräfte auf die Klinken zu kompensieren, sind beim Adapter 1'
gemäss Fig. 3 die Anschlagmittel parallel zur Anschlagfläche
der Klinken abragende Erhebungen 4' bzw. 4" mit einem diagonalen Abstand untereinander entsprechend wieder der Schlüsselweite des Anschlagflansches am Kabelstecker.

Montageadapter der vorgenannten Art werden vorzugsweise aus
einem Spritzgussteil aus einem geeigneten Kunststoff hergestellt.

Patentansprüche

1. Montageadapter für den Anschluss von Koaxialkabel bei Schwachstromschaltungs- und Verteileranordnungen, zur durchsteckbaren Bestückung mit mindestens einer Kabelbuchse eines Koaxialverbinders, welche Buchse kabel- bzw. rückseitig einen polygonalen, insbesondere sechskantförmigen Anschlagflansch trägt, der gegebenenfalls mit einer kupplungs- bzw. frontseitigen Gegenmutter zusammenwirkt, dadurch gekennzeichnet, dass vom Adapterkörper (1,1') rückseitig und nahe dem Rand der betreffenden Durchsrecköffnung (2) für die Kabelbuchse (11) mindestens zwei, sich diagonal gegenüberliegende, zum schnappenden Hintergreifen des Anschlagflansches (12) der durchgesteckten Kabelbuchse (11) bestimmte Klinken (3) abragen.

2. Montageadapter nach Anspruch 1, dadurch gekennzeichnet, dass der diagonale Abstand zwischen den Klinken (3) der Schlüsselweite des Anschlagflansches (12) entspricht.

3. Montageadapter nach Anspruch 1, dadurch gekennzeichnet, dass vom Adapterkörper (1,1') rückseitig zusätzlich mindestens zwei sich diametral gegenüberliegende Anschlagmittel (4,4',4") abragen, deren diagonaler Abstand der Schlüsselweite des Anschlagflansches (12) des Kabelsteckers (11) entspricht.

4. Montageadapter nach Anspruch 3, dadurch gekennzeichnet, dass die Anschlagmittel (4) in Umfangsrichtung bezüglich der Klinken (3) versetzte, die Verdrehkräfte beim An- oder Abkuppeln des Kabelsteckers (11) aufnehmende Stege sind.

5. Montageadapter nach Anspruch 3, dadurch gekennzeichnet, dass die Anschlagmittel (4',4") parallel zur Anschlagfläche der Klinken (3) abragende, die Seitenkräfte auf die Klinken sowie die Verdrehkräfte beim An- oder Abkuppeln des Kabelsteckers (11) aufnehmende Erhebungen sind.

6. Montageadapter nach Anspruch 1, dadurch gekennzeichnet, dass die Wurzel (3") des elastischen Armes (3') jeder Klinke (3) am Adapterkörper (1) vertieft angeordnet ist.

7. Montageadapter nach Anspruch 1, gekennzeichnet durch einen stegförmigen Körper (1) zur Montage am Gestell von Verteileranordnungen.

8. Montageadapter nach Anspruch 1, gekennzeichnet durch einen steckdosenförmigen Kunststoff-Körper (1') zum direkten oder indirekten Befestigen durch Verschraubung oder Verklinkung an Mehrfach-Einbauboxen (20), Unterputz-Anschlussdosen u. dgl.

9. Montageadapter nach Anspruch 8, dadurch gekennzeichnet,

- 11 -

dass die indirekte Befestigung des Adapter-Körpers (1')
über einen Montage-Ring (30) erfolgt, mit dem der Körper
(1') aufspannbar ist.

10. Montageadapter nach Anspruch 1, dadurch gekennzeichnet,
dass dieser aus einem Spritzgussteil aus einem geeigneten
Kunststoff besteht.

## Fig.1

## Fig. 2

Fig. 3

Fig. 4

Fig. 5

Fig. 6

Fig. 7